# EUROPEAN PATENT SPECIFICATION

(11) **EP 4 367 273 B1**
(45) Date of publication and mention of the grant of the patent: **23.09.2026**
(21) Application number: 22743944.5
(22) Date of filing: 04.07.2022
(51) Int. Cl.: C21B 13/00, C22B 1/244, C22B 1/242, C21B 13/14

(54) **IRON BRIQUETTES**
EISENBRIKETTS
BRIQUETTES DE FER

(30) Priority: 07.07.2021 SE 2150893
(43) Date of publication of application: 15.05.2024
(73) Proprietor: HYBRIT Development AB, 111 64 Stockholm (SE)
(72) Inventor: KOJOLA, Niklas, 141 41 Huddinge (SE); SICHEN, Du, 187 75 Täby (SE); HUSS, Joar, 115 57 Stockholm (SE); VICKERFÄLT, Amanda, 121 32 Stockholm (SE); PEI, Martin, 113 24 Stockholm (SE)
(74) Representative: Zacco Sweden AB
(86) International application number: PCT/SE2022/050678
(87) International publication number: WO 2023/282824

(56) References cited:
- US-A1- 2001 047 699
- US-A1- 2010 199 806
- US-A1- 2016 244 859

## Description

### TECHNICAL FIELD

The present invention relates to an iron briquette, as well as a method for producing such an iron briquette.

### BACKGROUND ART

Steel is the world's most important engineering and construction material. It is difficult to find any object in the modern world that does not contain steel, or depend on steel for its manufacture and/or transport. In this manner, steel is intricately involved in almost every aspect of our modern lives.

In 2018, the total global production of crude steel was 1 810 million tonnes, by far exceeding any other metal, and is expected to reach 2800 million tonnes in 2050 of which 50% is expected to originate from virgin iron sources. Steel is also the world's most recycled material with a very high recycling grade due to the metals' ability to be used over and over again after remelting, using electricity as the primary energy source.

Thus, steel is a cornerstone of modern society with an even more significant role to play in the future.

Steel is mainly produced via three routes:
i) Integrated production using virgin iron ores in a blast furnace (BF), where iron oxide in the ore is reduced by carbon to produce iron. The iron is further processed in the steel plant by oxygen blowing in a basic oxygen furnace (BOF), followed by refining to produce steel. This process is commonly also referred to as 'oxygen steelmaking'.
ii) Scrap-based production using recycled steel, which is melted in an electric arc furnace (EAF) using electricity as the primary source of energy. This process is commonly also referred to as 'electric steelmaking'.
iii) Direct reduction production based on virgin iron ore, which is reduced in a direct reduction (DR) process with a carbonaceous reducing gas to produce sponge iron. Shaft-based processes produce sponge iron pellets (DRI), whereas other process may produce sponge iron fines. Both DRI and sponge iron fines may be compacted to produce hot briquetted iron (HBI), a form of sponge iron that is more suitable for transport. The sponge iron is subsequently melted together with scrap in an EAF to produce steel.

The term crude iron is used herein to denote all irons produced for further processing to steel, regardless of whether they are obtained from a blast furnace (i.e. pig iron), or a direct reduction shaft (i.e. sponge irons such as DRI, HBI or sponge iron fines).

Although the above-named processes have been refined over decades and are approaching the theoretical minimum energy consumption, there is one fundamental issue not yet resolved. Reduction of iron ore using carbonaceous reductants results in the production of CO2 as a by-product. For every ton steel produced in 2018, an average of 1.83 tonnes of CO2 were produced. The steel industry is one of the highest CO2-emitting industries, accounting for approximately 7% of CO2 emissions globally. Excessive CO2-generation cannot be avoided within the steel production process as long as carbonaceous reductants are used.

The HYBRIT initiative has been founded to address this issue. HYBRIT, short for HYdrogen BReakthrough Ironmaking Technology - is a joint venture between SSAB, LKAB and Vattenfall, funded in part by the Swedish Energy Agency, and aims to reduce CO2 emissions and decarbonize the steel industry.

Central to the HYBRIT concept is a direct reduction shaft-based production of sponge iron from virgin ore. However, instead of using carbonaceous reductant gases, such as natural gas, as in present commercial direct reduction processes, HYBRIT proposes using hydrogen gas as the reductant, termed hydrogen direct reduction (H-DR). The hydrogen gas may be produced by electrolysis of water using mainly fossil-free and/or renewable primary energy sources, as is the case for e.g. Swedish electricity production. Thus, the critical step of reducing the iron ore may be achieved without requiring fossil fuel as an input, and with water as a by-product instead of CO2.

However, sponge iron produced by hydrogen direct reduction may be prone to some disadvantages in downstream steelmaking steps.

Sponge iron produced using traditional fossil-based carbonaceous reductants typically comprises significant amounts of dispersed carbon (typically up to 5 wt%), due to carbon incorporation from the carbonaceous reducing gas during reduction of the iron ore. The dispersed carbon is predominantly in the form of cementite (Fe₃C), with a lesser proportion consisting of graphite dispersed throughout the sponge iron. The eutectic (melting) temperature of the iron-cementite system is 1147 °C (lower than the melting point of pure iron, 1536 °C), and cementite exothermally dissociates in the molten bath, assisting in melting of the sponge iron. Sponge iron produced by hydrogen direct reduction naturally lacks cementite and therefore is more difficult to melt in the EAF. This can lead to higher electricity requirements in the EAF melting step, excessive consumption of the EAF electrodes, and extended tap-to-tap times.

In order to overcome such disadvantages, means have been proposed of treating sponge iron produced by hydrogen direct reduction using a carburizing gas in order to obtain a sponge iron that more closely resembles sponge iron produced by conventional fossil means.

Document WO 2019/238720 discloses a method for producing carburized direct-reduced sponge iron from iron oxide material. First, direct reduction is performed by means of a reducing gas consisting at least predominantly of H2. Thereafter, the carbon content in the sponge iron is increased by means of a supplied carburizing gas, after which carburizing gas used in this process is at least partially drawn off in order to largely avoid mixing with the reducing gas. The carburizing gas can be, for example, natural gas, methane, ethane, propane, butane, carbon monoxide, or a mixture of several of these gases.

Document US 2015/0259760 A1 describes a method for producing steel in which iron ore is reduced with hydrogen and the resulting intermediate product of reduced iron ore and possibly accompanying substances is subjected to further metallurgical processing. In reducing the iron ore to produce the intermediate product, a carbon-containing or hydrogen-containing gas is added to the hydrogen in order to incorporate carbon into the intermediate product. Examples of the carbon-containing or hydrogen-containing gas include CH4, coke oven gas (COG), synthesis gas, natural gas, biogas, gas from pyrolysis, and renewable resources.

Patent documents US 2016/244859 A1 and US 2001/047699 A1 further disclose an iron briquette being a combination of sponge iron pellets with carbon powder.

There remains a need for a means of producing steel in a more environmentally friendly manner.

### SUMMARY OF THE INVENTION

Sponge iron pellets (DRI) produced by hydrogen direct reduction are more difficult to melt in a melt furnace as compared to conventional DRI. This difficult in melting can lead to higher electricity requirements in the EAF melting step, excessive consumption of the EAF electrodes, and extended tap-to-tap times. In cases where the localised rate of charging DRI exceeds the melting capacity of the furnace, the accumulation of unmelted mounds ("ferrobergs") of DRI may result, and such ferrobergs may require extended time and electricity consumption in order to be melted and disperse.

In order to overcome such disadvantages, means have been proposed of treating sponge iron produced by hydrogen direct reduction using a carburizing gas in order to obtain a sponge iron that more closely resembles sponge iron produced by conventional fossil means. The inventors of the present invention have identified a number of shortcomings associated with such proposed prior art means of improving the efficiency of downstream processing of sponge iron produced by hydrogen direct reduction.

In the proposed prior art means, the sponge iron is converted to a relatively more meltable form using a carburizing gas, either during reduction or subsequent to reduction. Regardless of whether the carburizing gas is a fossil gas or not, the proposed processes will be expensive, as they require extensive additional gas treatment and equipment, as well as providing a less efficient reduction if carburizing during reduction (due to the lower reduction rate of carbon monoxide as reductant as compared to hydrogen). Such processes will also make relatively inefficient use of the carbon contained in the carburization gas, since a proportion of the carburization gas will typically be purged and combusted in order to maintain a stable gas composition. If the carburizing gas is fossil derived, this will also give rise to net CO2 emissions. Furthermore, performing carburization as part of the direct reduction process means that the carbon content cannot be freely optimized, as it will be dependent on reduction process settings.

It would be advantageous to achieve a means of overcoming, or at least alleviating, at least some of the above mentioned shortcomings. In particular, it would be desirable to provide a sponge iron-derived product of hydrogen direct reduction that is both efficient to produce and is readily amenable to efficient downstream processing, in particular readily meltable. In order to better address one or more of these concerns, a sponge iron-derived product of hydrogen direct reduction having the features defined in the appended independent claim is provided.

The sponge iron-derived product of hydrogen direct reduction is an iron briquette. The iron briquette comprises compressed sponge iron pellets and carbon powder located in interstitial spaces between the compressed sponge iron pellets. The iron briquette comprises at least 0.2 wt% carbon powder. The sponge iron pellets used in producing the iron briquette comprise at least 0.5 wt% iron oxide and are essentially free of carbon.

The iron briquette may be produced by providing sponge iron pellets, providing carbon powder, producing a mixture comprising the sponge iron pellets and the carbon powder, and briquetting the mixture.

Surprisingly, the inventors have found that the downstream processing advantages typically obtained by having dispersed cementite in the sponge iron can also be substantially obtained by briquetting the carbon-free sponge iron together with carbon powder. That is to say that the iron briquettes melt almost as well as corresponding briquettes produced using conventional fossil-based sponge iron and provide effective reduction of residual iron oxide in the sponge iron. This is despite the carbon not being dissolved in the iron and being substantially limited to the interstitial spaces between compressed pellets. However, in order to obtain these advantages, it is essential that the iron briquette comprises adequate amounts of iron oxide and carbon. This is because the mechanically added solid carbon does not decrease the melting temperature of the iron in the same manner as carbon dissolved in the iron as cementite. Instead, without wishing to be bound by theory, the inventors have identified a mechanism whereby initial melting of distributed remaining iron oxide (FeO, having a melting point of 1377 °C) causes the melted oxide to flow out of the compressed sponge iron due to phase expansion when melting. The liquid oxide meets the solid carbon in the interstitial spaces of the briquette, which causes the iron to be reduced and results in a carbon saturated liquid iron phase. This liquid iron phase then dissolves the surrounding solid iron. Thus, the inventors have discovered that even iron briquettes having only heterogeneously distributed solid carbon may have suitable melting properties for further processing in any melting process, e.g. in an electric arc furnace (EAF) or induction furnace (IF).

Briquetting carbon-free sponge iron pellets with carbon powder in the manner disclosed herein provides several further advantages. It is relatively low-cost in terms of equipment, material, and operating expenses. It requires less carbon, meaning that emissions are decreased. Moreover, since the demand for carbon is decreased, it facilitates the use of carbon from renewable resources. It allows control over the iron oxide content in the melt independently of the reduction stage, thus allowing optimisation of reduction and post-reduction steelmaking stages independently. For instance, greater flexibility in the obtained degree of metallisation in the reduction stage is obtained. This may e.g. permit use of lower metallisation when the cost of electricity (and thus cost of electrolytic hydrogen as reducing gas) is high. The gas created by the reaction between iron oxide and carbon may also improve the kinetic condition and energy efficiency in the EAF. It is also thought that in the conditions prevailing in a melt furnace, the rapid gas evolution arising when the concentrated molten iron oxide meets the concentrated carbon may assist in "exploding" the iron briquettes, leading to rapid disintegration of the briquettes and further improved melting.

The sponge iron pellets used in producing the iron briquette comprise at least 0.5 wt% iron oxide. They may comprise at least 1 wt% iron oxide, such as at least 1.5 wt% iron oxide, such as at least 3 wt% iron oxide, or at least 4 wt% iron oxide. Greater amounts of iron oxide in the sponge iron are associated with improved melting properties, but may require a concomitant increase in the amount of carbon powder in the iron briquette in order to effectively reduce the residual iron oxide.

The iron briquette may be produced by hot briquetting the mixture. Hot briquetting is a conventional means of treating sponge iron in order to provide a standardized product that is less reactive to air, and thus easier to ship and handle than conventional DRI. The product of hot briquetting is termed hot briquetted iron, HBI, and is also known as type (A) DRI. By producing the iron briquettes using hot briquetting, the iron briquettes may be produced using equipment that is already widely utilized in the art, with only relatively minor modifications required. This may further decrease the cost of industrial implementation.

The iron briquette may comprise from about 95 wt% to about 99.5 wt% compressed iron pellets, and from about 0.5 wt% to about 5 wt% carbon powder. This should ensure sufficient carbon in order to optimise performance in the EAF.

The amount of carbon in the iron briquette may be tailored to the degree of metallization of the sponge iron pellets in order to provide a suitable FeO concentration in the EAF slag. This helps optimize yield and decrease impurities in the steel.

The iron briquette may have an effective density of greater than about 4000 kg/m³, such as greater than about 5000 kg/m³. Such densities are typical for HBI and ensure that the sponge iron has suitable compaction in order to be adequately passivized.

The iron briquette may have a smallest dimension of greater than about 20 mm, preferably greater than about 30 mm. The iron briquette may have a largest dimension of less than about 150 mm. Such dimensions are typical for HBI and help ensure that the iron briquette may be used interchangeably with conventional HBI.

The sponge iron pellets may have a median diameter of greater than about 7 mm prior to briquetting, preferably greater than about 10 mm. That is to say that the sponge iron is DRI having a standard dimension, not fines. The sponge iron pellets may be essentially spherical. The significant diameter of the sponge iron pellets being briquetted means that the carbon powder added to the briquette will inevitably be inhomogenously distributed in the pellet.

The sponge iron pellets may have a bulk density of from about 1500 kg/m³ to about 2000 kg/m³ prior to briquetting. Such densities are typical for DRI, and mean that the final briquette is significantly compacted as compared to the initial pellets. The sponge iron pellets may have a metallisation of greater than 85%, preferably greater than 90%, such as greater than 95%. A greater degree of metallisation means that less carbon is required to provide reduction of residual iron oxide in the iron briquette, thus potentially decreasing the carbon consumption and overall emissions in the steelmaking process. The sponge iron pellets may comprise greater than about 85 wt% total iron, preferably greater than about 90 wt% total iron. Such total iron contents are in line with conventional DRI and may provide a good quality final product.

The carbon powder may comprise greater than about 80 wt% carbon, preferably greater than about 90 wt% carbon. This helps ensure that the carbon powder is sufficiently devolatilized in order to prevent degradation of the iron briquette at the elevated temperatures that typically prevail during briquetting. The carbon powder may for example comprise/consist essentially of/consist of pulverized anthracite, coke, graphite, or biocoal having a composition substantially corresponding to anthracite, coke or graphite, or any combination thereof. For example, the carbon powder may comprise/consist essentially of/consist of a biocoal derived from high temperature pyrolysis of biomass, such as lignocellulosic biomass, such as forestry residues.

If the carbon powder is derived from a renewable source, it may have a radiocarbon age of less than 10 000 years before present, preferably less than 1000 years before present, even more preferably less than 100 years before present. Due to the relatively small amounts of carbon required in the iron briquette, the use of relatively scarce renewable carbon sources is facilitated. By using a renewable carbon, the environmental impact of the steelmaking process may be further decreased.

The iron briquette may further comprise added flux. For example, the iron briquette may preferably further comprise from about 0.1 wt% to about 4 wt% added flux. Flux may be added in suitable quantities in order to obtain an optimal slag composition in the EAF. Thus, by adding both carbon to reduce iron oxide and flux to control other slag oxides, it is possible to control the slag composition independently of the direct reduction parameters, meaning that both the reduction step and subsequent steelmaking steps can be independently optimised. This is not possible in a conventional process where flux is added primarily during pelletizing of the ore and carbon is introduced to the sponge iron during the reduction step.

According to a further aspect of the invention, the objects of the invention are achieved by a method of producing an iron briquette, according to the appended independent claims.

The method comprises the steps of: providing sponge iron pellets that comprise at least 0.5 wt% iron oxide and are essentially free of carbon; providing carbon powder; producing a mixture comprising the sponge iron pellets and the carbon powder, wherein the mixture comprises at least 0.2 wt% carbon powder; and briquetting the mixture.

The method results in an iron briquette as described herein, and thus obtains the corresponding advantages thereof.

The step of briquetting the mixture may be performed at a temperature of greater than 500 °C, such as greater than 600 °C, preferably greater than 650 °C. Such temperatures are conventional in production of HBI.

The sponge iron pellets and carbon powder may be provided separately to a briquetting apparatus, and mixed within the briquetting apparatus. This may help avoid problems with the mixture separating due to the vast difference in size between the carbon powder and the sponge iron pellets. Alternatively, the mixture of sponge iron pellets and carbon powder may be produced prior to introduction into a briquetting apparatus.

Further objects, advantages and novel features of the present invention will become apparent to one skilled in the art from the following detailed description.

### BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:
- Fig 1: schematically illustrates an exemplifying embodiment of the ore-based steelmaking value chain according to the Hybrit concept;
- Fig. 2a: schematically illustrates an apparatus for producing HBI;
- Fig. 2b: schematically illustrates an iron briquette produced by a method as disclosed herein;
- Fig. 3: show images illustrating the melting progression of three briquettes made from sponge iron pellets at various points in time (a) to (e);
- Fig. 4: shows micrographs of a non-reduced KPRS pellet;
- Fig. 5: shows a micrograph of a reduced (90% DoR) KPRS pellet;
- Fig. 6: show micrographs of a hydrogen-reduced KPRS pellet (a) prior to heating, and (b) after heating at 1500 °C for 240 s;
- Fig. 7: shows micrographs of a hydrogen reduced KPRS pellet with 99% degree of reduction after heating at 1600 °C for a variety of times (a) to (f);
- Fig. 8: shows the relative carbon mass loss of iron briquette samples B2-B5 with respect to time and temperature; and
- Fig. 9: shows the microstructure of an iron briquette after heating at 1500 °C for 300 s.

### DETAILED DESCRIPTION

The invention will now be described in more detail with reference to certain exemplifying embodiments and the drawings. However, the invention is not limited to the exemplifying embodiments discussed herein and/or shown in the drawings, but may be varied within the scope of the appended claims. Furthermore, the drawings shall not be considered drawn to scale as some features may be exaggerated in order to more clearly illustrate certain features.

The present invention is based upon the discovery by the inventors that briquetting carbon-free sponge iron pellets (H-DRI) with carbon powder provides briquettes that surprisingly demonstrate melting properties vastly superior to H-DRI briquetted without carbon, and comparable to briquettes produced using conventional fossil-based DRI. This is unexpected since the iron briquette lacks homogenously dispersed carbon as in conventional DRI, and instead consists substantially of large pieces of carbon-free compressed sponge iron pellets, with carbon powder located substantially in the interstices between such compressed pellets.

Without wishing to be bound by theory, the inventors have discovered that the advantageous melting of the iron briquettes is due to a hitherto undisclosed mechanism whereby iron oxide melts first in the briquette, flow through pores in the compressed pellets and pools at the interstices of the compressed pellets. At these interstices, carbon is dissolved in the liquid oxide and simultaneously reduces the oxide to liquid iron. This results in a carbon-saturated liquid iron phase, even at temperatures below the melting temperature of pure iron. This pool of liquid iron dissolves the surrounding solid iron. Compared with the initial porous structure of iron briquette, the pooling of liquid metal in the pores and interstices in this manner increases the effective thermal conductivity of the briquette, thus aiding and speeding up the melting process. For comparison, the thermal conductivity for air is 0.113 W m⁻¹ K⁻¹ while being ~40 W m⁻¹ K⁻¹ for liquid iron. In order for this mechanism to proceed, adequate amounts of residual iron (II) oxide (FeO) are essential in the iron briquette.

Besides the advantageous melting obtained, the carbon monoxide produced when reducing residual oxide or when the carbon reacts with FeO in the slag provides further advantages. These include the production of a foamy slag due to the gas evolution, which assists in isolating the melt and protecting the electrodes of the EAF. This in turn leads to a lower energy consumption and less consumption of the EAF electrodes. Moreover, the gas evolution assists in purging dissolved gaseous elements such as nitrogen from the metal bath.

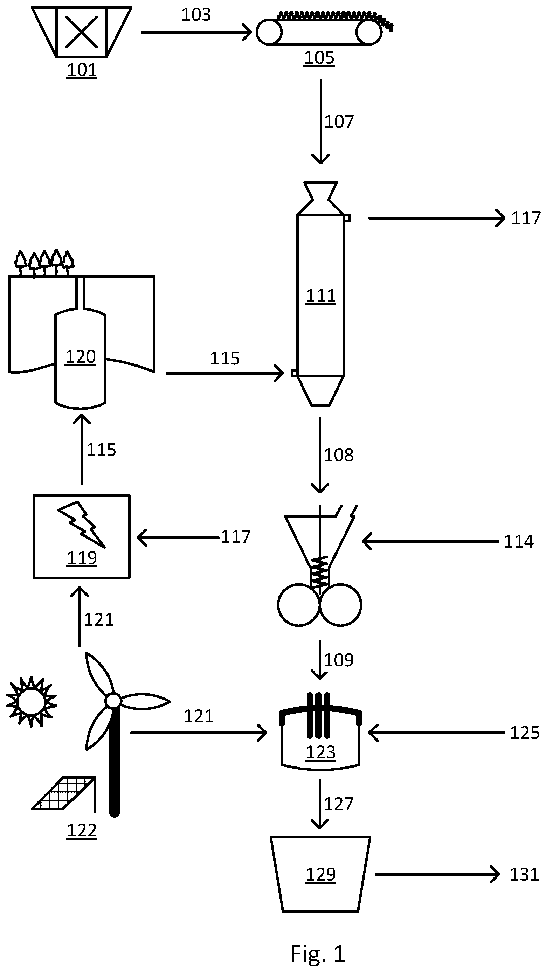

The present disclosure facilitates an ore-based steelmaking value chain that is more effective with regard to energy use, requires less carbon, and produces fewer emissions. Figure 1 schematically illustrates an exemplifying embodiment of the ore-based steelmaking value chain according to the Hybrit concept and incorporating the present disclosure. The ore-based steelmaking value chain starts at the iron ore mine 101. After mining, iron ore 103 is concentrated and processed in a pelletizing plant 105, and iron ore pellets 107 are produced. These pellets are converted to sponge iron pellets 108 by reduction in a direct reduction shaft 111 using hydrogen gas 115 as the main reductant and producing water 117 as the main by-product. The hydrogen gas 115 is produced primarily by electrolysis of water 117 in an electrolyser 119 using electricity 121 from a fossil-free or renewable source 122. The hydrogen gas 115 may be stored in a hydrogen storage 120 prior to introduction into the direct reduction shaft 111. In accordance with the present disclosure, it is desired that the sponge iron may be readily meltable in a subsequent EAF processing step. Therefore, the sponge iron pellets 108 obtained from the direct reduction shaft 111 are fed to a briquetting unit 113 together with carbon powder 114, preferably from a renewable source. In the briquetting unit 113 the sponge iron pellets 108 are briquetted together with the carbon powder 114, thus providing iron briquettes 109. The iron briquettes 109 are then melted using an electric arc furnace 123, optionally together with a proportion of scrap iron 125 or other iron source, to provide a melt 127. The electricity 121 used in the electric arc furnace 123 preferably comes from a renewable source 122. The melt 127 is subjected to further downstream secondary metallurgical processes 129, and steel 131 is produced.

The iron briquettes are made using a mixture comprising, consisting essentially of, or consisting of carbon-free sponge iron pellets, carbon powder, and optionally further additives such as added fluxes. The mixture may comprise from about 95 wt% to about 99.5 wt% sponge iron pellets. The mixture may comprise from about 0.5 wt% to about 5 wt% carbon powder. Optionally, the mixture may comprise from about 0.1 wt% to about 4 wt% added flux.

### Carbon-free sponge iron pellets

The sponge iron pellets used in the iron briquettes are essentially carbon-free. Such pellets may be obtained as the product of a shaft-based direct reduction process wherein only essentially carbon-free reducing gas is used. The reducing gas may for example consist essentially of hydrogen and optionally gases that are inert in the process (e.g. nitrogen, argon). A pilot plant capable of producing such carbon-free sponge iron pellets using hydrogen as reducing gas is presently in operation in Luleå, Sweden.

By essentially free of carbon it is meant that no carbon is purposively introduced into the sponge iron pellet, e.g. by use of a carburizing gas. However, minor quantities of carbon may be present in the pellet due to retention of carbon-containing components of the unreduced pellets. For example, iron ore pellets are typically coated with carbonate-containing minerals (e.g. lime or cement) in order to prevent agglomeration and sticking in the direct reduction shaft, and carbon derived from such carbonates may be residual in the sponge iron pellets. The sponge iron pellet comprises less than about 0.1 wt% carbon, preferably less than about 0.05 wt% carbon. For comparison, DRI produced by conventional fossil means typically comprises from about 1 wt% to about 5 wt% carbon.

The sponge iron pellets may have a metallisation of greater than 85%, preferably greater than 90%, such as greater than 95%. However, it is essential that at least 0.5 wt% residual iron oxide is maintained in the sponge iron in order to obtain the favourable melting properties as described herein.

Besides the above considerations, the sponge iron pellets used in producing the iron briquettes may closely resemble conventional sponge iron pellets, also known as DRI or type (B) DRI. They have a median diameter of greater than about 7 mm prior to briquetting, preferably greater than about 10 mm. They may have a median diameter of less than about 25 mm prior to briquetting, preferably less than about 20 mm. They may have a bulk density of from about 1500 kg/m³ to about 2000 kg/m³, preferably from about 1750 kg/m³ to about 1900 kg/m³. They may comprise greater than about 85 wt% total iron, preferably greater than about 90 wt% total iron.

### Carbon powder

Any suitable carbon powder may be used in the production of the iron pellets. By suitable carbon powder it is meant a powder having a suitably high carbon content, such as greater than about 80 wt% carbon, preferably greater than about 90 wt% carbon. It is preferable that the carbon powder does not give off excessive quantities of volatiles at the temperatures prevailing during briquetting, as this may hinder briquetting or lead to degradation of the integrity of the briquettes. Therefore, if a hot briquetting process is to be used, the carbon powder may suitably be a carbon powder having a low volatile content and high fixed carbon content such as pulverized anthracite, coke or graphite, or a biocoal having a composition substantially corresponding to such carbons. For example, the carbon powder may be a biocoal derived from high temperature pyrolysis of biomass, such as lignocellulosic biomass. Due to the relatively small amounts of carbon required in the iron briquette, the use of relatively scarce renewable carbon sources is facilitated. By using a renewable carbon, the environmental impact of the steelmaking process may be further decreased. Carbon powder derived from a renewable source, such as from the high-temperature pyrolysis of biomass, has a much younger radiocarbon age as compared to carbon derived from fossil sources. For example, carbon derived from fossil resources typically has a radiocarbon age of in excess of 35 000 years, whereas carbon derived from renewable sources is found to be "modern". Depending on the proportion of renewable carbon to fossil carbon in the carbon powder, the radiocarbon age of the carbon powder may range from about 35 000 years (if the carbon powder is exclusively fossil-derived) to "modern" (if the carbon powder is exclusively renewable-derived). It is preferable that the carbon powder derives, at least in part, or completely, from renewable resources. Therefore, the carbon powder may have a radiocarbon age of less than 10 000 years before present, preferably less than 1000 years before present, even more preferably less than 100 years before present. Highly reliable methods of radiocarbon dating carbon powders such as biocoal and coal, using methods such as accelerator mass spectrometry (AMS), are known in the art.

The carbon powder should be sufficiently finely crushed in order to be integrated into the iron briquette and dissolve efficiently in the liquid iron. However, it should not be so finely crushed as to create problems with dusting and material handling. Besides these general considerations, the particle size of the carbon powder has not been found to be critical in the experiments performed to date. A powder having an average particle size (D₅₀, MMD) of less than about 3 mm, such as from about 0.01 mm to about 2 mm may be suitable.

### Further additives

Depending on the composition of the sponge iron pellets, it may be desirable to add additional fluxes to the iron briquettes in order to produce self-fluxing briquettes. By flux, it is meant a substance added to the briquette to assist in removing impurities in the form of slag when melted. This may decrease or avoid the need for addition of slag-formers during melting in the EAF and help ensures that an optimal slag composition is obtained. In turn, this may help optimise the quality and yield of steel products obtained from the briquettes. Moreover, present day direct reduction processes may typically use self-fluxing iron ore pellets, wherein fluxes are introduced to the pellets already at the iron ore pelletizing stage, prior to the direct reduction. By being able to introduce flux instead (or in addition) in a briquetting step, herein termed "added flux", additional degrees of freedom are obtained in design of an optimal iron ore pellet and process from hydrogen direct reduction of iron ore.

Suitable fluxes are known in the art, and include, but are not limited to, lime, dololime, burnt lime, burnt dololime, silica, and combinations thereof.

Fluxes, if added to the iron briquette, may be added in any suitable quantities. For example, the iron briquette may comprise from about 0.1 wt% to about 4 wt% added flux.

### Briquetting

Briquetting may be performed using any suitable apparatus, and comprises the following steps: providing sponge iron pellets as described herein; providing carbon powder as described herein; producing a mixture comprising the sponge iron pellets and the carbon powder, wherein the mixture comprises at least 0.2 wt% carbon powder, and briquetting the mixture.

The mixture may be produced prior to introduction to a briquetting apparatus. Alternatively, the sponge iron pellets and carbon powder may be provided separately to a briquetting apparatus, and mixed within the briquetting apparatus. This may serve in avoiding excessive separation of the mixture prior to briquetting, and thus avoid large variation in briquette composition.

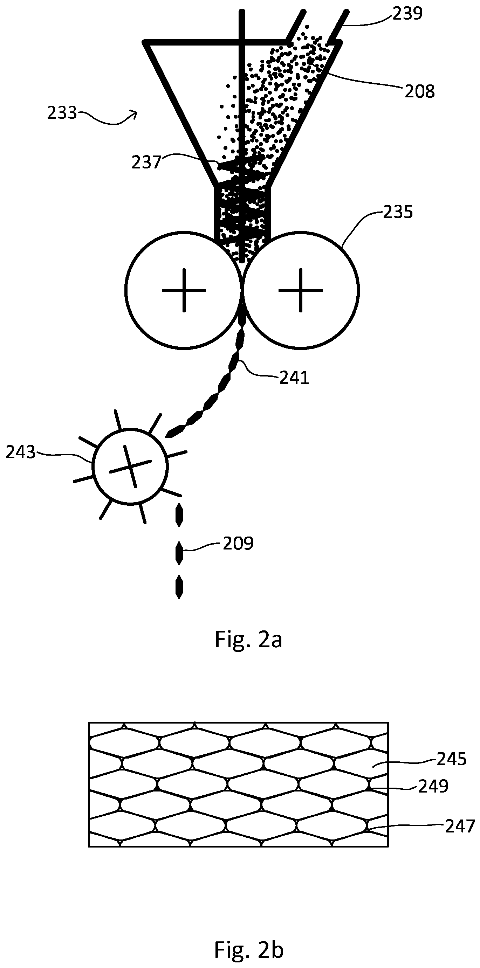

The briquetting may suitably be performed using hot briquetting to provide hot briquetted iron (HBI) briquettes, as such a technique is well-established in the field. A suitable apparatus for producing HBI is schematically illustrated in Figure 2, and comprises a briquetting press 233 having two synchronously counter-rotating rollers 235, a screw feeder 237 and a material supply 239. A mixture of hot sponge iron pellets 208 from the direct reduction shaft and carbon (not shown) is formed at any suitable point prior to briquetting. This mixture is fed between the rollers 235, where it is compressed in pockets formed by the rollers in order to produce a continuous string of briquettes 241. Downstream of the briquetting press, a briquette string separator 243, such as a rotor with impact bars, is arranged to separate the string of formed briquettes into individual briquettes 209.

Hot briquetting may be performed at a temperature in excess of 600 °C, such as a temperature of from about 600 °C to about 800 °C, or from about 650 °C to about 750 °C, such as about 700 °C.

Alternatively, briquetting may be performed using any other suitable technique.

A schematic illustration of a magnified cross-section of an iron briquette formed by such a process is illustrated in Figure 2b. It can be seen that the briquette comprises compressed sponge iron pellets 245, with interstitial spaces 247 between the compressed pellets. The carbon powder 214 mostly resides in these interstitial spaces, although some minor proportion of powder may permeate into the sponge iron after mixing and prior to briquetting, due to the highly porous nature of the sponge iron.

In other respects, the iron briquettes produced by the presently disclosed method may resemble conventional HBI. They may have an effective density of greater than about 4000 kg/m³, such as greater than about 5000 kg/m³. This allows the HBI to easily permeate the slag and reach the melt when being charged to an EAF. They may have a smallest diameter of greater than approximately 20 mm, such as greater than approximately 30 mm. Typical HBI is approximately the same size and resembles in shape a standard bar of soap.

### Experimental

### Sponge iron pellet preparation

To obtain pellets of different reduction degrees, commercial KPRS hematite pellets from LKAB were reduced at 900°C by pure hydrogen (2 L min⁻¹) in a vertical tube furnace. The reduction degree was calculated by the following equation: $Degree of Reduction = \frac{{m}_{2} - {m}_{1}}{{m}_{100 %} - {m}_{1}}$ where m₁ and m₂ are the mass of the pellets before and after reduction, respectively, and m_{100%} is the mass at full metallization.

Additionally, pellets were reduced in an atmosphere of 20% CO- 80% H₂ at 900°C. The expected carbon potential was 0.7 in reference to graphite. All carbon is therefore expected to be dissolved in metal phase. The pellets were then sent to SSAB Oxelösund for LECO-analysis to determine the carbon content. The degree of reduction was calculated by Equation (1), after subtracting the mass added by carbon.

### Iron briquette preparation

Briquetting of reduced pellets was conducted at room temperatures using steel dies and a hydraulic press. The pressure during briquetting was 300 bar. Two different sizes of steel dies were used. About 6.6 grams of reduced iron ore pellets was pressed using a steel die with a diameter of 11 mm. This resulted in briquettes with the dimensions Ø11 mm × 13 mm height corresponding to an effective density of 5.34 g cm⁻³, while a sample size of 95 grams was used together with steel die with 30 mm in diameter. Carbon was added as graphite powder non-homogenously to the pellets, i.e. without any substantial mixing prior to briquetting.

### Experimental techniques

Different experimental techniques were employed within the scope of this study. The techniques were employed with the aim to study (a) how different DRI samples (1. without carbon, 2. with dissolved carbon, and 3. with mechanically added carbon powder) melt; (b) the effect of carbon on the melting speed of DRI; (c) mechanism study to understand the behaviour of carbon during melting and FeO reduction. Both a horizontal furnace and a vertical furnace were employed.

The main feature of the horizontal furnace is that the sample can be observed through a quartz glass window while it is melted. Hence, the horizontal furnace was used to observe the melting behaviour in-situ and to compare the melting speeds of different samples.

The vertical furnace, which enabled faster cooling, was used to study the melting mechanisms of DRI and FeO reduction by carbon. The experimental techniques will be described briefly below, while an in-depth description can be found in: A. Vickerfält, J. Martinsson and D. Sichen, "Effect of Reduction Degree on Characteristics of Slag Formed by Melting Hydrogen-Reduced DRI and Partitions of P and V between Slag and Metal", Steel Research International, 2021, 92, pp. 1-11.

A vertical tube furnace with an alumina reaction tube was used to melt the samples. The alumina reaction tube was connected to a water-cooled aluminium cooling chamber in the upper end, and a water-cooled aluminium cap in the lower end. All connections were sealed by O-rings. A steel rod entered through the top of the cooling chamber. The samples were connected in the lower end to the steel rod using either a 40 cm Mo-wire or Mo-rod depending on the system size of the sample. The steel rod was in turn connected in the upper end to a lifting system. The lifting system allowed for rapid movement of the samples in the vertical direction. A thermocouple was inserted through the aluminium cap at the lower end of the tube. The temperature in the even temperature zone was uniform over a length of 5 cm.

Each sample, either a single pellet or briquette, was put in an MgO-crucible. While a small basket of Mo-wire was woven to hold the crucible in the single pellet and small briquette experiments, a Mo-holder was used to hold samples with a larger sample size. The mass of pellets/briquettes, crucible and basket were kept the same in all experimental runs, within the same system size, as not to alter the heat capacity of samples.

The furnace was heated to either 1500°C or 1600°C. The samples were positioned in the cooling chamber during the heating procedure. When the target temperature was reached, the sample was lowered to a preheating position at 1200 °C or 1300°C (below the melting point of FeO).

The sample was maintained at the preheating position for 10 min, then lowered at high speed to the even temperature zone where it was kept for a predetermined time ranging from 60 to 1800 seconds. In order to stop any reactions and to freeze the microstructure, after the predetermined time the sample was lifted in a matter of seconds to the cooling chamber, while injecting a high flow of argon to enhance the convection. The same procedure was used for the small briquette experiments, with the exception that no preheating was applied to exclude any unwanted reaction with carbon.

The total weight of the samples was measured before and after the experiments. Some iron samples were also sent to SSAB Oxelösund for carbon analysis by LECO. The compositions of the phases were determined using electron dispersive spectroscopy (EDS) in a scanning electron microscope (SEM). The composition data was used to determine the presence of different phases. The actual compositions should be interpreted in a semi-quantitative manner, given the limitations of EDS and the very small size of some phases (in the order of 1µm). XRF analysis providing the total slag phase composition and analysis of the metal phase by OES could be carried out in relation to the larger system size of 95 g.

### Melting behaviour of different briquettes

To observe the melting behaviour of reduced iron ore pellets in-situ, the horizontal furnace equipped with a quartz window was employed. The sample was moved horizontally on a graphite track and could be viewed through a quartz window. A video camera placed in front of the window recorded the melting in real time. Three samples of briquetted sponge iron pellets were placed in a row on an alumina substrate. The substrate rested on top a graphite holder. As the furnace had reached the target temperature of 1600°C, the samples were moved to the even temperature zone from the cooling chamber. The recording was started as the samples were stationary in the even temperature zone.

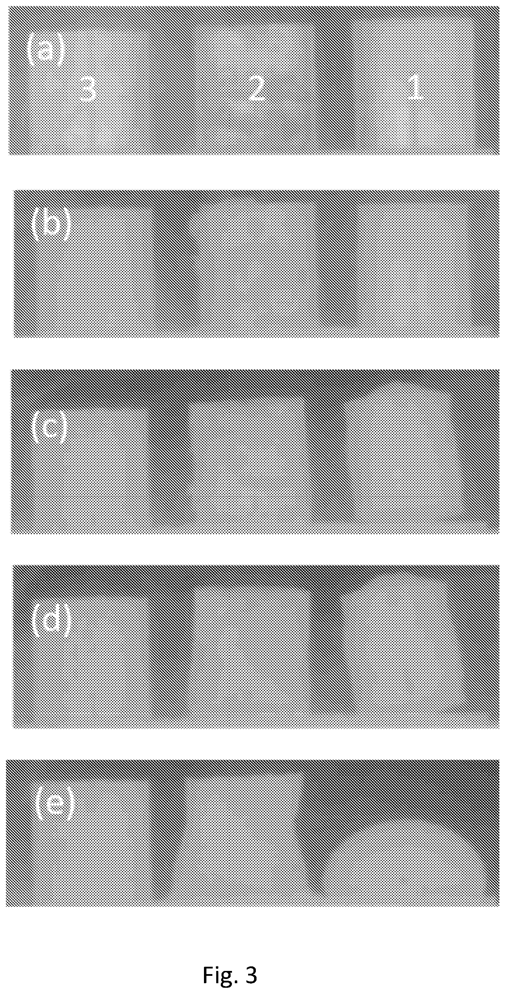

The melting progression of three briquettes made from sponge iron pellets are shown in Figures 3(a-e). The three samples had the same DRI mass, namely 6.6 grams and the same degree of reduction (99.5% metallization). The rightmost sample (Sample 1) consisted of pellets with 0.9 wt% dissolved carbon (reduced by CO-H₂ gas mixture). The sample positioned in the center (Sample 2) consisted of carbon-free DRI pellets (reduced in pure hydrogen) briquetted together with 0.06 grams of graphite powder. This corresponded to 0.9 wt% carbon. Thus, the total carbon contents in sample 1 and sample 2 were identical. Sample 3 sitting leftmost has no carbon and consists only of carbon-free DRI pellets.

Figure 3(a) shows the briquettes in their initial state. The image is taken at the point of insertion into the even temperature zone of the horizontal furnace. The non-homogenous distribution of carbon is visible by observing the sample in the center of **Figure 3(a)****.** During briquetting, graphite was forced into the cavities between the pellets. This resulted in pockets of graphite in the briquette, visible as black areas on the surface.

Figure 3(b) shows the samples 70 seconds after the insertion into the even temperature zone. Sample 1 (rightmost sample) and Sample 3 (leftmost sample) are unaffected. However, a production of gas is evident as seen by the bubble formation on the surface of Sample 2 (the center sample). This demonstrates that reduction of iron oxide by mechanically added carbon takes place during the melting process of this briquette.

The appearances of the samples 155 seconds and 156 seconds after the point of insertion are shown in Figures 3(c) and 3(d) respectively. The Sample 3 remains unaffected while Sample 1 and Sample 2 show morphological changes from the initial state. A liquid film of slag and molten iron has formed on the surface of the center sample (Sample 2). This is identified by the movement of the spherical slag droplets across the surface of the briquette. Additionally, the Sample 2 was observed to rapidly vibrate due to the produced gases by the reaction, presented in Equation 2.

*FeO*(*l*) *+ C(s)* → *Fe*(*l*) *+ CO*(*g*) (2)

The vibration is illustrated by comparing the relative position of the Sample 2 in Figures 3(c) to 3(d). No vibration was observed in Sample 1, indicating thereby no profound reduction was taking place in this sample. Mechanically added graphite displayed a greater reactivity compared to dissolved carbon. This is understandable, since the carbon activity in Sample 2 is unity, which is much higher than the carbon activity in Sample 1. Without wishing to be bound by theory, it is thought that the rapid gas evolution due to the reaction between the molten iron oxide and the mechanically added carbon may lead to "exploding" of the iron briquette under the conditions prevailing in a melt furnace, further assisting in providing rapid disintegration and melting of the briquettes.

195 seconds after the point of insertion, the Sample 1 has completely molten, shown in Figure 3(e). Substantial partial melting of Sample 2 (in the center) is apparent, while the Sample 3, which has no carbon, demonstrates no change from the initial state. It is therefore evident that the samples have not reached the melting temperature of pure iron after 195 seconds. Yet, the Sample 2 displays partial melting. This indicates that during melting the mechanically added carbon has dissolved into the iron to form a liquid metal phase. The liquid metal greatly increases the effective thermal conductivity, thus aiding in the melting process. The melting time of briquettes consisting of carbon-free DRI with mechanically added carbon is therefore comparable to that of briquettes consisting of DRI having dissolved carbon (i.e. conventional fossil-based DRI).

### Microstructure progression in carbon-free sponge iron pellets

To understand the melting mechanisms of DRI pellets it is essential to study the changes on a microscale during melting. The progression of the microstructure during melting of KPRS pellets having varying degrees of reduction was therefore studied in detail. For this purpose, 18 samples were studied. The experimental conditions of these samples are listed in Table 1, below.

**Table 1**

| Sample No. | Degree of Reduction, % | Carbon addition, g | Carbon addition, wt% | Sample mass, g | Time, s | Temperature, °C | Preheat, °C |
|---|---|---|---|---|---|---|---|
| A1 | 99.0 | 0 | - | 2.28 | 60 | 1600 | 1300 |
| A2 | 99.0 | 0 | - | 2.34 | 90 | 1600 | 1300 |
| A3 | 99.0 | 0 | - | 2.39 | 120 | 1600 | 1300 |
| A4 | 99.0 | 0 | - | 2.28 | 320 | 1600 | 1300 |
| A5 | 99.0 | 0 | - | 2.32 | 600 | 1600 | 1300 |
| B1 | 90.0 | 0 | - | 6.60 | 240 | 1500 | 1200 |
| B2 | 90.0 | 0.084 | | 6.60 | 300 | 1500 | 1200 |
| B3 | 95.5 | 0.050 | | 6.64 | 240 | 1600 | - |
| B4 | 95.5 | 0.051 | | 6.68 | 180 | 1600 | - |
| B5 | 95.4 | 0.048 | | 6.63 | 240 | 1500 | - |
| B6 | 95.5 | 0 | - | 6.62 | 180 | 1600 | - |
| C1 | 95.0 | 0.81 | 0.95 | 95.11 | 1200 | 1600 | 1300 |
| C2 | 95.1 | 0.79 | 0.92 | 96.01 | 900 | 1600 | 1300 |
| C3 | 95.0 | 0.79 | 0.93 | 95.05 | 1800 | 1600 | 1300 |
| C4 | 94.9 | 0.984 | 1.15 | 95.22 | 1200 | 1600 | 1300 |
| C5 | 94.9 | 0.397 | 0.47 | 94.93 | 1200 | 1600 | 1300 |
| C6 | 97.2 | 0.355 | 0.41 | 94.94 | 1080 | 1600 | 1300 |
| C7 | 97.2 | 0.357 | 0.41 | 94.86 | 1800 | 1600 | 1300 |

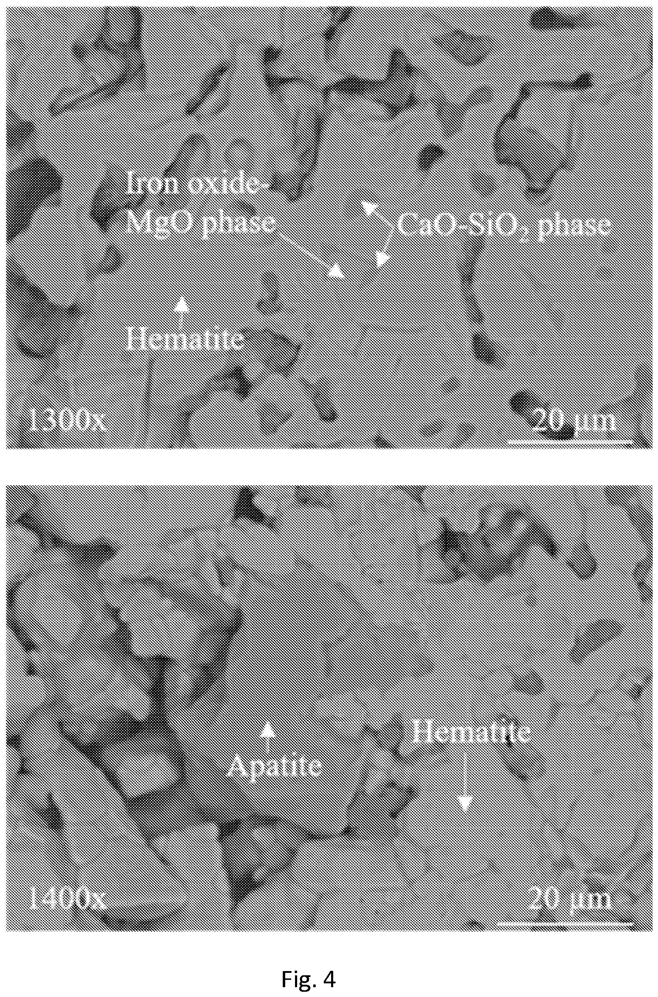

To begin with, an unreduced KRPS pellet was examined in SEM-EDS to observe the phases present. Example micrographs are shown in Figure 4. Four phases were found, namely (1) the hematite phase, (2) a calcium silicate phase, (3) a phase containing both MgO (~10 wt%) and iron oxide and (4) apatite phase.

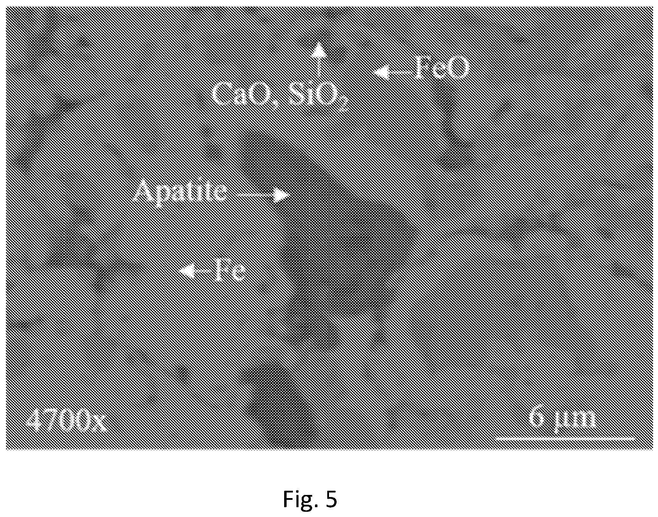

Furthermore, two reduced pellets were studied: one with 90% degree of reduction and one with 99% degree of reduction. Figure 5 shows an example of the micrographs in a sample of 90% reduction. The major phases present in a reduced pellet are: metallic iron, iron oxide phase (FeO) existing as islands surrounded by the iron matrix, and a CaO-SiO₂ phase. While all the phases are also found in the sample reduced to 99%, the iron oxide phase is much less than compared to the pellet having 90% metallization.

### Microstructure of pellets having 90% DoR @ 1500 °C (Sample B1)

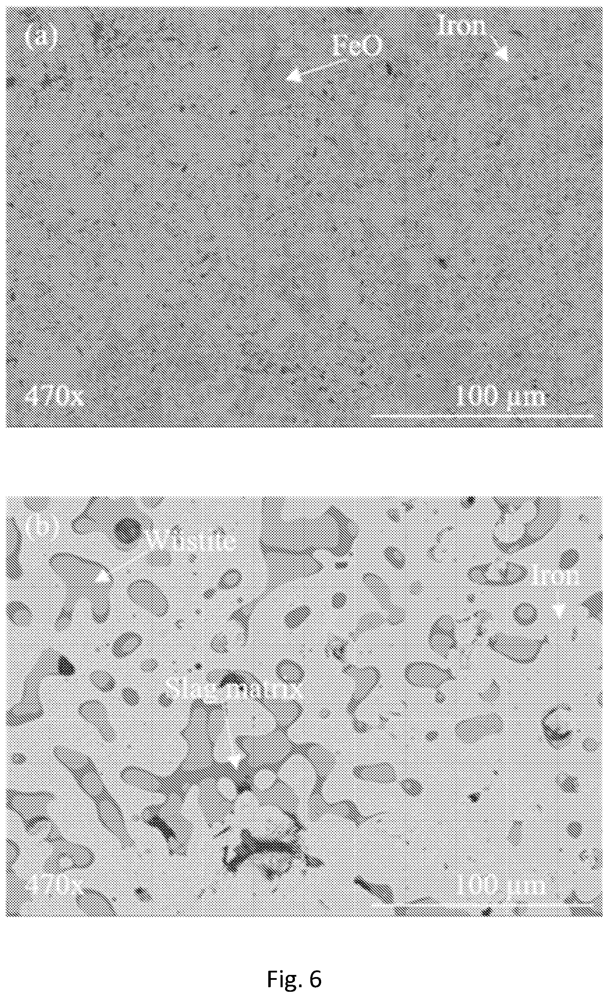

Pellets of 90% degree of reduction was heated to 1500°C to study the formation of slag prior to the melting of the metal phase, (sample B1). The microstructure before and after heating is shown in Figure 6(a) and (b), respectively. Figure 6(a) shows the microstructure of a pellet with a degree of reduction of 90%. Figure 6(b) shows the microstructure of a pellet of the same reduction degree after being kept at 1500°C for 240 s.

A comparison of Figure 6(a) and 6(b) reveals the following: (1) The microstructure has coarsened, while the iron phase is still solid after being kept at 1500°C for 240 seconds. (2) In the pores of the solid Fe, a slag has already formed. The formed slag contains two different phases, matrix liquid phase and wüstite phase, as indicated in Figure 6(b). The liquid phase contains (neglecting all compounds <1 wt%) CaO, SiO₂, FeO, Al₂O₃, MgO, TiO₂, P₂O₅. The wüstite phase contains FeO with minor amounts of MgO and V₂O₃. It is evident that the FeO and the CaO- and SiO₂ rich phase have reacted and formed a slag phase.

FeO melts at 1377°C and has viscosity 0.3 poise at 1377°C . For that reason, flow of FeO to the CaO- and SiO₂ rich phase very likely is responsible for the initiation of slag formation. Pores inside the pellets enables flow of FeO. With respect to the coarsening of the microstructure shown in Figure 6(a) and (b), rearrangement of the grain structure is also involved in this process.

### Microstructure of pellets having 99% DoR @ 1600 °C (Samples A1-A5)

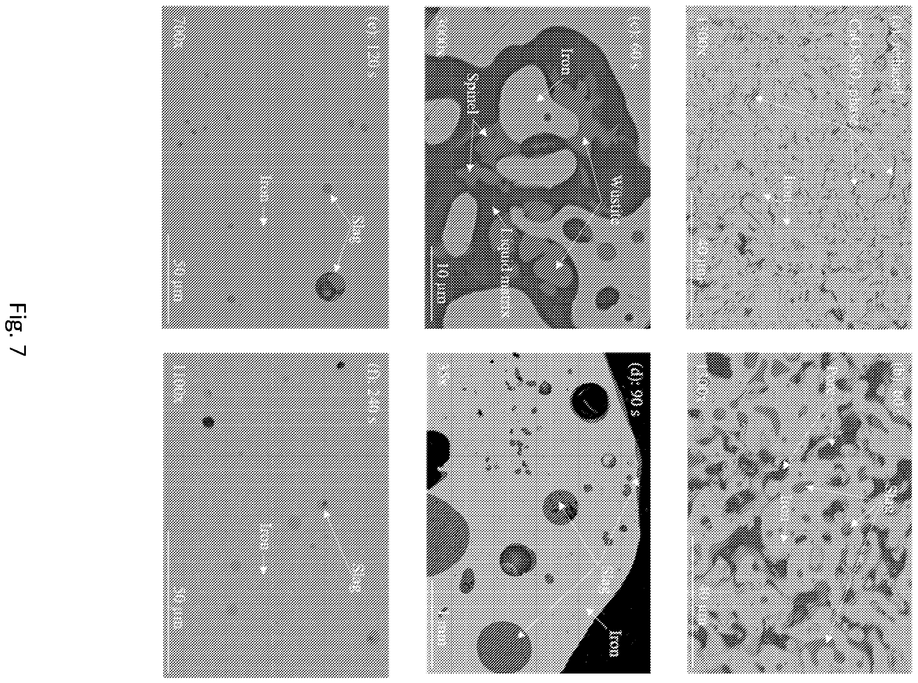

A pellet of 99% degree of reduction was maintained at 1600°C for different durations (60-600 s). After 60 s at 1600°C the iron is not yet liquid. However, a slag phase has already been formed and is distributed in pores of the pellet, Figure 7(b). A comparison between Figure 7(a), showing a reduced pellet prior to heating, and Figure 7(b), again reveals a coarsening of the microstructure. This confirms the observation made in Figures 6(a) and (b). The microphotograph in Figure 7(c) has higher magnification showing the phases present after 60 s at 1600°C.

The major phase is the iron phase. The slag is composed of a liquid phase and two precipitated phases, wüstite and spinel. The spinel phase was not observed at 90% reduction degree, which is in accordance with previous experience. The slag formation is in line with the findings presented in an earlier report, where the phases of the bulk slag resulting in from the autogenous slag from melting of KPRS pellets have been discussed in-depth. This shows that despite the large difference in FeO content, both the pellet reduced to 90% and the pellet reduced to 99% form a slag of FeO, CaO and SiO₂ (and more) very rapidly. The slag formation is in fact completed during melting.

After 90 s the iron is liquid. A few spherical slag droplets, up to 1 mm, are present in the iron melt, as shown in Figure 7(d). Most slag droplets are much smaller than this, on the micrometre scale. A slag layer has formed on the surface of the iron. The same types of slag phases as after 60 s are present.

After 120 s, the majority of the slag phase has separated from liquid metal phase. Some slag particles, approximately 30 µm in size, containing multiple slag phases are, however, still present in the metal bath, see Figure 7(e).

After 240 s, the largest slag particles are about 10 µm. The majority of the slag particles are homogeneous and close to pure FeO with some percent dissolution of other oxides, see Figure 7(f).

### Mechanisms of FeO reduction by carbon (decarburization) and melting

Carbon was included in briquettes of carbon-free DRI as graphite powder. The samples were weighed before and after the experiment to estimate the extent of decarburization. The weight difference was then calculated into relative carbon loss using a stochiometric mass balance based on the decarburization reaction presented in Equation (2).

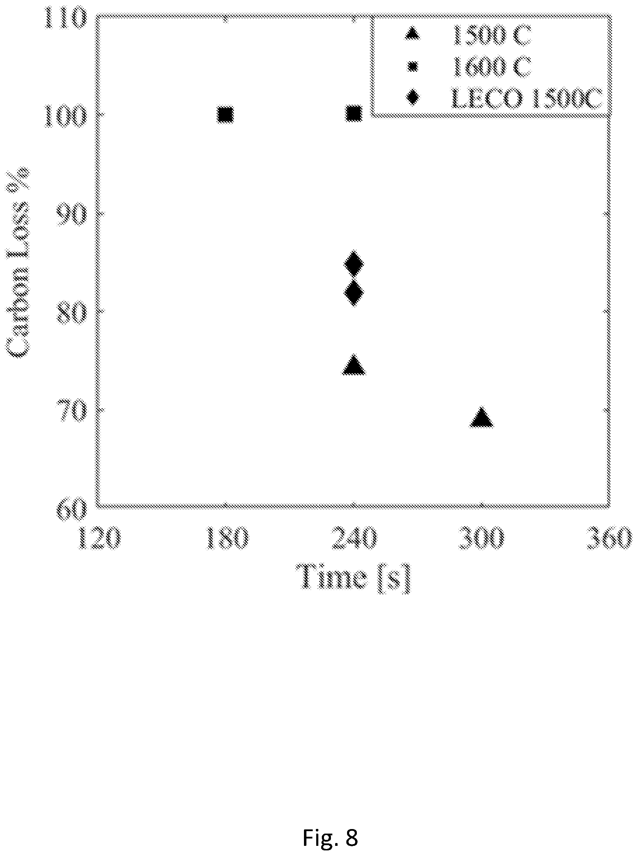

The relative carbon mass loss of samples B2-B5 can be found with respect to time and experimental temperature in Figure 8. One sample, B5, was sent for carbon analysis by LECO. This result is also presented in Figure 8 where the carbon concentration has been recalculated into relative carbon mass loss. It can be seen that 70-85% of the added carbon mass had reacted after 240-300 s at 1500°C while no carbon remained after 180s at 1600°C.

Figure 8 reveals evidently that decarburization occurs in two explicit steps. (a) before melting of the metal phase and (b) after melting of the metal phase. This confirms the observation made in Figure 3(b). Decarburization occurs during the melting process; in fact, this step provides most of the decarburization. The predicted amount of remaining carbon using mass balance calculations was found to be in line with the LECO-analysis. This entails that equation (2) is representative of the decarburization reaction and that the efficiency of carbon added during briquetting is close to stochiometric (the theoretical maximum).

To confirm the findings provided above in the case of bigger mass, briquettes consisting of ~95g of reduced pellets were studied. Seven experiments were conducted, see samples C1-C7 in Table 1.

The carbon contents in the metal phase of the samples were determined by OES-analysis (see Table 1). Note that amounts of carbon addition were different based on the degrees of reduction and mass balance calculation aiming at 10-50wt% FeO content in the slag. The melting time of the larger system size was determined to be 900 seconds. The amount of added carbon had little effect over the range of 0.47-1.14 wt% on the final concentration of dissolved carbon as the steel has been fully decarburized after melting.

### Microstructure of iron briquettes consisting of carbon-free pellets and graphite @ 1500 °C (Sample B2)

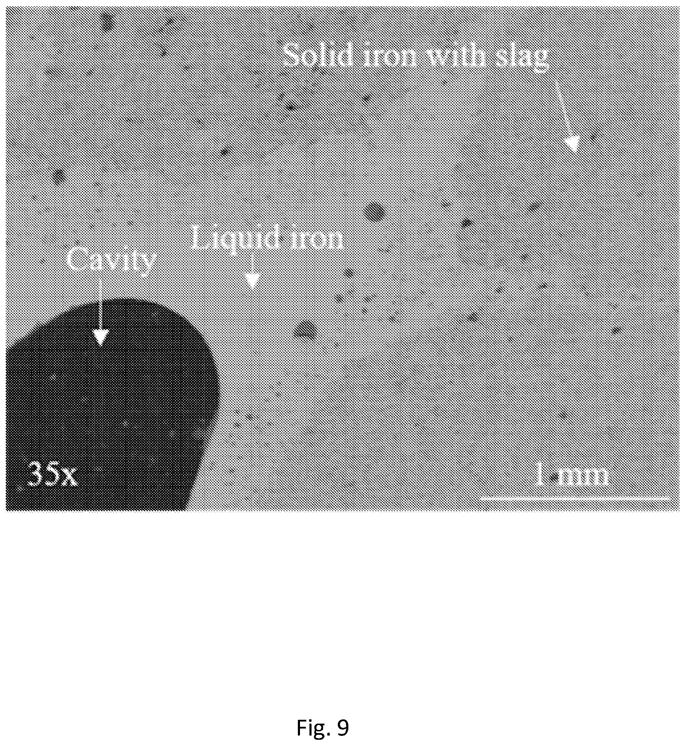

Additionally, the microstructure of a briquette with added carbon held at the experimental temperature of 1500°C for 300 s, sample B2 (90% metallization, 0.084 g carbon added in the briquette of 6.6 g), was examined by SEM. Figure 9 shows the microstructure of a briquette with added carbon (Sample B2) showing a liquid metal phase (white) close to a cavity (black).

A liquid metal phase (white) has formed around a large cavity (black). The cavities are in turn connected to the surface of the sample. Unaffected areas show a structure similar to Figure 6 (b). This confirms the observation made in Figure 3(e). Carbon has dissolved into the iron forming a liquid metal phase at temperatures below the melting point of pure iron. Note that to lower the melting temperature, the dissolution of carbon into Fe is the necessary condition. The present results reveal evidently that the reduction of FeO by carbon and the dissolution of carbon into the produced metal take place simultaneously. They also indicates that an optimization of the amount of carbon addition is desirable by taking into consideration the process, e.g. the required melting temperature, the carbon content in the steel and the FeO content in the slag.

### Conclusions

It has been shown in Figure 6(b) that during heating the iron oxide remaining after reduction flows out of the iron grains into the porous structure of pellet, taking up gangue and fluxing oxides, forming a slag. As the slag flows through the pores it meets solid carbon particles residing in pockets between the pressed pellets and reacts with them readily. Decarburization takes place in two steps. Decarburization is initiated during the melting process (even as the Fe is still solid) and produces gas as evidently revealed by the bubble formation on the surface (seen in Figure 3(b)) and by the vibration of the briquette in Figures 3(c) and (d). The reaction between FeO and carbon produces a liquid metal phase with dissolved carbon during melting, see Figure 9. The liquid metal initially formed continues to dissolve the remaining carbon particles and at the same time dissolves the solid Fe (which has no carbon). Hence, the melting process of the whole briquette is accelerated. The liquid metal phase decreases the melting time of the briquette to the extent that it is comparable with pellets carburized by a CO-H₂ gas mixture, Figure 3(e). Decarburization continues after the complete melting of the metal phase, see Figure 8. The reaction between carbon and iron oxide was shown to be close to stochiometric, see Equation (2) and Figure 8. Briquetting of hydrogen-reduced iron ore pellets together with carbon would provide minimal carbon emissions and at the same time provide an efficient melting for the production of crude steel.

## Claims

1. An iron briquette (109, 209) produced by providing sponge iron pellets (108, 208), providing carbon powder (114, 214), producing a mixture comprising the sponge iron pellets and the carbon powder, and briquetting the mixture to provide an iron briquette comprising compressed sponge iron pellets (245) and carbon powder (214) located in interstitial spaces (247) between the compressed sponge iron pellets, wherein the iron briquette comprises at least 0.2 wt% carbon powder, and wherein the sponge iron pellets have a median diameter of greater than about 7 mm prior to briquetting, comprise at least 0.5 wt% iron oxide, and are essentially free of carbon, comprising less than about 0.1 wt% carbon.

2. The iron briquette according to claim 1, produced by hot briquetting the mixture.

3. The iron briquette according to any one of the preceding claims, comprising from about 95 wt% to about 99.5 wt% compressed sponge iron pellets, and from about 0.5 wt% to about 5 wt% carbon powder.

4. The iron briquette according to any one of the preceding claims, having an effective density of greater than about 4000 kg/m³.

5. The iron briquette according to any one of the preceding claims, having a smallest dimension of greater than about 20 mm.

6. The iron briquette according to any one of the preceding claims, wherein the sponge iron pellets have a median diameter of greater than about 10 mm prior to briquetting.

7. The iron briquette according to any one of the preceding claims, wherein the sponge iron pellets have a bulk density of from about 1500 kg/m³ to about 2000 kg/m³ prior to briquetting.

8. The iron briquette according to any one of the preceding claims, wherein the sponge iron pellets have a metallisation of greater than 85%, preferably greater than 90%, such as greater than 95%.

9. The iron briquette according to any one of the preceding claims, wherein the sponge iron pellets comprise greater than about 85 wt% total iron, preferably greater than about 90 wt% total iron.

10. The iron briquette according to any one of the preceding claims, wherein the carbon powder comprises greater than about 80 wt% carbon, preferably greater than about 90 wt% carbon.

11. The iron briquette according to any one of the preceding claims, wherein the carbon powder has a radiocarbon age of less than 10 000 years before present, preferably less than 1000 years before present, even more preferably less than 100 years before present.

12. The iron briquette according to any one of the preceding claims, further comprising added flux, preferably further comprising from about 0.1 wt% to about 4 wt% added flux.

13. A method for producing an iron briquette according to any one of the preceding claims, the method comprising the steps:
- providing sponge iron pellets that have a median diameter of greater than about 7 mm, comprise at least 0.5 wt% iron oxide and are essentially free of carbon, comprising less than about 0.1 wt% carbon,
- providing carbon powder,
- producing a mixture comprising the sponge iron pellets and the carbon powder, wherein the mixture comprises at least 0.2 wt% carbon powder, and
- briquetting the mixture.

14. The method according to claim 13, wherein the step of briquetting the mixture is performed at a temperature of greater than 500 °C.

15. The method according to any one of claims 13-14, wherein the sponge iron pellets and carbon powder are provided separately to a briquetting apparatus, and mixed within the briquetting apparatus.

## Patentansprüche

1. Eisenbrikett (109, 209), das durch Bereitstellen von Eisenschwammpellets (108, 208), Bereitstellen von Kohlenstoffpulver (114, 214), Herstellen einer Mischung, die die Eisenschwammpellets und das Kohlenstoffpulver umfasst, und Brikettieren der Mischung zur Bereitstellung eines Eisenbriketts hergestellt wird, das komprimierte Eisenschwammpellets (245) und Kohlenstoffpulver (214) umfasst, das sich in Zwischenräumen (247) zwischen den komprimierten Eisenschwammpellets befindet, wobei das Eisenbrikett mindestens 0,2 Gew.-% Kohlenstoffpulver umfasst und wobei die Eisenschwammpellets vor dem Brikettieren einen Mediandurchmesser von mehr als etwa 7 mm aufweisen, mindestens 0,5 Gew.-% Eisenoxid umfassen und im Wesentlichen frei von Kohlenstoff sind, wobei sie weniger als etwa 0,1 Gew.-% Kohlenstoff umfassen.

2. Eisenbrikett nach Anspruch 1, das durch Heißbrikettieren der Mischung hergestellt wird.

3. Eisenbrikett nach einem der vorhergehenden Ansprüche, umfassend etwa 95 Gew.-% bis etwa 99,5 Gew.-% komprimierte Eisenschwammpellets und etwa 0,5 Gew.-% bis etwa 5 Gew.-% Kohlenstoffpulver.

4. Eisenbrikett nach einem der vorhergehenden Ansprüche mit einer effektiven Dichte von mehr als etwa 4000 kg/m³.

5. Eisenbrikett nach einem der vorhergehenden Ansprüche mit einer kleinsten Abmessung von mehr als etwa 20 mm.

6. Eisenbrikett nach einem der vorhergehenden Ansprüche, wobei die Eisenschwammpellets vor dem Brikettieren einen Mediandurchmesser von mehr als etwa 10 mm aufweisen.

7. Eisenbrikett nach einem der vorhergehenden Ansprüche, wobei die Eisenschwammpellets vor dem Brikettieren eine Schüttdichte von etwa 1500 kg/m³ bis etwa 2000 kg/m³ aufweisen.

8. Eisenbrikett nach einem der vorhergehenden Ansprüche, wobei die Eisenschwammpellets einen Metallisierungsgrad von mehr als 85 %, vorzugsweise mehr als 90 %, beispielsweise mehr als 95 %, aufweisen.

9. Eisenbrikett nach einem der vorhergehenden Ansprüche, wobei die Eisenschwammpellets mehr als etwa 85 Gew.-% Gesamteisen, vorzugsweise mehr als etwa 90 Gew.-% Gesamteisen, umfassen.

10. Eisenbrikett nach einem der vorhergehenden Ansprüche, wobei das Kohlenstoffpulver mehr als etwa 80 Gew.-% Kohlenstoff, vorzugsweise mehr als etwa 90 Gew.-% Kohlenstoff, umfasst.

11. Eisenbrikett nach einem der vorhergehenden Ansprüche, wobei das Kohlenstoffpulver ein Radiokohlenstoffalter von weniger als 10.000 Jahren vor heute, vorzugsweise weniger als 1000 Jahren vor heute, noch bevorzugter weniger als 100 Jahren vor heute, aufweist.

12. Eisenbrikett nach einem der vorhergehenden Ansprüche, ferner umfassend zugesetztes Flussmittel, vorzugsweise ferner umfassend etwa 0,1 Gew.-% bis etwa 4 Gew.-% zugesetztes Flussmittel.

13. Verfahren zum Herstellen eines Eisenbriketts nach einem der vorhergehenden Ansprüche, wobei das Verfahren die Schritte umfasst:
- Bereitstellen von Eisenschwammpellets, die einen Mediandurchmesser von mehr als etwa 7 mm aufweisen, mindestens 0,5 Gew.-% Eisenoxid umfassen und im Wesentlichen frei von Kohlenstoff sind, wobei sie weniger als etwa 0,1 Gew.-% Kohlenstoff umfassen,
- Bereitstellen von Kohlenstoffpulver,
- Herstellen einer Mischung, die die Eisenschwammpellets und das Kohlenstoffpulver umfasst, wobei die Mischung mindestens 0,2 Gew.-% Kohlenstoffpulver umfasst, und
- Brikettieren der Mischung.

14. Verfahren nach Anspruch 13, wobei der Schritt des Brikettierens der Mischung bei einer Temperatur von mehr als 500 °C durchgeführt wird.

15. Verfahren nach einem der Ansprüche 13 bis 14, wobei die Eisenschwammpellets und das Kohlenstoffpulver getrennt einer Brikettiervorrichtung zugeführt und innerhalb der Brikettiervorrichtung miteinander vermischt werden.

## Revendications

1. Briquette de fer (109, 209) produite en fournissant des boulettes de fer spongieux (108, 208), en fournissant de la poudre de carbone (114, 214), en produisant un mélange comprenant les boulettes de fer spongieux et la poudre de carbone, et en briquetant le mélange pour fournir une briquette de fer comprenant des boulettes de fer spongieux comprimées (245) et de la poudre de carbone (214) située dans des espaces interstitiels (247) entre les boulettes de fer spongieux comprimées, dans laquelle la briquette de fer comprend au moins 0.2 % en poids de poudre de carbone, et dans laquelle les boulettes de fer spongieux ont un diamètre médian supérieur à environ 7 mm avant le briquetage, comprennent au moins 0.5 % en poids d'oxyde de fer, et sont essentiellement exemptes de carbone, comprenant moins d'environ 0.1 % en poids de carbone.

2. Briquette de fer selon la revendication 1, produite par briquetage à chaud du mélange.

3. Briquette de fer selon l'une quelconque des revendications précédentes, comprenant d'environ 95 % en poids à environ 99.5 % en poids de boulettes de fer spongieux comprimées, et d'environ 0.5 % en poids à environ 5 % en poids de poudre de carbone.

4. Briquette de fer selon l'une quelconque des revendications précédentes, ayant une masse volumique effective supérieure à environ 4000 kg/m³.

5. Briquette de fer selon l'une quelconque des revendications précédentes, ayant une plus petite dimension supérieure à environ 20 mm.

6. Briquette de fer selon l'une quelconque des revendications précédentes, dans laquelle les boulettes de fer spongieux ont un diamètre médian supérieur à environ 10 mm avant le briquetage.

7. Briquette de fer selon l'une quelconque des revendications précédentes, dans laquelle les boulettes de fer spongieux ont une masse volumique apparente d'environ 1500 kg/m³ à environ 2000 kg/m³ avant le briquetage.

8. Briquette de fer selon l'une quelconque des revendications précédentes, dans laquelle les boulettes de fer spongieux ont une métallisation supérieure à 85 %, de préférence supérieure à 90 %, telle que supérieure à 95 %.

9. Briquette de fer selon l'une quelconque des revendications précédentes, dans laquelle les boulettes de fer spongieux comprennent plus d'environ 85 % en poids de fer total, de préférence plus d'environ 90 % en poids de fer total.

10. Briquette de fer selon l'une quelconque des revendications précédentes, dans laquelle la poudre de carbone comprend plus d'environ 80 % en poids de carbone, de préférence plus d'environ 90 % en poids de carbone.

11. Briquette de fer selon l'une quelconque des revendications précédentes, dans laquelle la poudre de carbone a un âge radiocarbone inférieur à 10 000 ans avant le présent, de préférence inférieur à 1000 ans avant le présent, de manière encore plus préférable inférieur à 100 ans avant le présent.

12. Briquette de fer selon l'une quelconque des revendications précédentes, comprenant en outre du fondant ajouté, de préférence comprenant en outre d'environ 0.1 % en poids à environ 4 % en poids de fondant ajouté.

13. Procédé pour produire une briquette de fer selon l'une quelconque des revendications précédentes, le procédé comprenant les étapes consistant à :
- fournir des boulettes de fer spongieux qui ont un diamètre médian supérieur à environ 7 mm, comprennent au moins 0.5 % en poids d'oxyde de fer et sont essentiellement exemptes de carbone, comprenant moins d'environ 0.1 % en poids de carbone,
- fournir de la poudre de carbone,
- produire un mélange comprenant les boulettes de fer spongieux et la poudre de carbone, le mélange comprenant au moins 0.2 % en poids de poudre de carbone, et
- briqueter le mélange.

14. Procédé selon la revendication 13, dans lequel l'étape consistant à briqueter le mélange est réalisée à une température supérieure à 500 °C.

15. Procédé selon l'une quelconque des revendications 13 à 14, dans lequel les boulettes de fer spongieux et la poudre de carbone sont introduites séparément dans un appareil de briquetage, et mélangées à l'intérieur de l'appareil de briquetage.
